# EUROPEAN PATENT APPLICATION

(11) **EP 1 152 363 A2**
(43) Date of publication of application: **07.11.2001**
(21) Application number: 01304044.9
(22) Date of filing: 03.05.2001
(51) Int. Cl.: G06F 17/60

(54) **Method and apparatus for enhancing communication between points of sale devices**

(30) Priority: 04.05.2000 GB 0010823
(71) Applicant: InSitu Limited, London SW19 6DE (GB)
(72) Inventor: Ferrer, Thomas Justus, London SE5 0NG (GB); Farrington-Darby, Nicholas, West Bridgford, Nottingham NGR 7LD (GB); Meaney, Declan Michael, Bath BA1 5NF (GB)
(74) Representative: Brown, Kenneth Richard

(57) **Abstract**

An interface and method of operating same is disclosed. The interface is adapted to allow flexible (including real-time) communication between financial transaction systems and financial administration systems, retailer administration systems or the like. The operation of the interface is predicated on a knowledge of the type of financial transaction device, including data formats, data content and physical attributes. The use of the interface allows what is known as 'legacy' hardware to communicate in real-time to financial and/or retail administration networks in situations where otherwise incompatible data formats or an intrinsic inability to communicate with networks and such systems would be the case. Applications of the invention include monitoring customer loyalty transactions, actioning real-time EFTPOS and EPOS transactions including credit and debit types. The invention further provides for customisation of the interface in accordance to the financial transaction with which it is associated including changing its functionality and interoperability.

## Description

### Field of the Invention

The present invention relates to methods and apparatus for interfacing electronic point of sale (EPOS) systems to financial and business institutions. More particularly, although not exclusively, the present invention relates to methods and apparatus particularly suited for interfacing established or "legacy" EPOS systems to contemporary financial and/or business administration systems in order to achieve cross-platform interoperability as well as to unify disparate EPOS systems and related retail networks.

### Background to the Invention

Electronic point of sale (EPOS) technology is well established in the retail environment. EPOS devices can serve a number of functions. The most important of these can be classified as financial transactions such as those involving credit, debit or point of sale funds-transfer cards. To effect such a transaction, a merchant enters the details of the financial transaction into the EPOS terminal. Following this, the purchaser usually swipes their card or otherwise enters data relating to their bank account along with the sums of money involved in the transaction. Depending on the type of financial transaction, funds are either transferred from the user's bank account to the bank account of the merchant on-line or details of the financial transaction are stored locally and are uploaded to the financial institution or computer data services company at another time. There exists other systems whereby financial institutions and retail/IT administration systems poll EPOS machines in order to download new transactions and their corresponding details.

There are other transaction/retail functions which are often carried out in conjunction with EPOS transactions. These include accumulating loyalty points based on, for example, the amount of money spent by a particular consumer at a certain business. Other functions formed in conjunction with EPOS devices include the collection and collation of statistical data relating to consumers or groups of consumers in respect of the products which they are buying, the geographical location of the purchase and many related data elements.

Such statistical information is usually used to provide demographic profiling of customers thereby allowing a retailer to target specific consumers based on their spending habits, financial capacity etc.

Depending on financial services which the vendor wishes to offer, it is common for a merchant or vendor to have at least an EPOS device and loyalty card terminal in order to manage stock and log payment transactions as well as monitor and update consumer promotion (or loyalty) cards. This example highlights one of the significant problems in the prior art in that present financial institution networks as well as commercial networks rely on separate hardware and software to collect the relevant data. A result of this is that financial transactions as well as customer retail/spending transactions are difficult to monitor in real-time as the hardware and software which supports this functionality is separate as is the downstream handling of the data.

For example, the distinction between different types of consumer data collection and handling can be illustrated by the differences between financial transactions and loyalty transactions related to consumer purchases.

Consider the situation where a customer purchases a product with a card (credit, debit or commercial) and, at the same time, uses a loyalty card to accumulate loyalty points resulting from the purchases. The product code, the number and type of items purchased produces a sales (or financial) transaction. The customer's card is swiped through an EPOS ISO standard card reader. Alternatively, the details may be manually entered into the EPOS terminal. The ISO card reader captures the card's alphanumeric number and then compares it to the EPOS card table. The card table is resident in the EPOS hardware and contains data identifying what type of card is being used for payment (for example Visa, Mastercard, Amex, Switch, etc), the country of origin of the card, the card issuer and the assigned floor limit for that particular card. If the floor limit is exceeded the EPOS hardware will dial out to the retailer's acquiring bank for an on-line payment authorisation. For financial transactions below the floor limit, the EPOS hardware performs an off-line authorisation. Details of off-line and on-line payment authorisation methods are known to those skilled in the art and will not be discussed further.

Assuming that either an off-line or on-line payment authorisation has been completed, a complete set of financial transaction data elements describing the transaction are stored in the EPOS hardware.

In this particular example, the EPOS hardware is polled on a regular basis. This means that a remote host dials into the EPOS terminal via a telephone or data line and downloads the stored data relating, for example, to the day's financial transactions.

Many retailers operate customer loyalty schemes and, to this end, have separate loyalty card terminals for capturing a customer's loyalty card number and other purchase details. When a loyalty card is swiped through the loyalty card terminal, the number of the card and the total amount of the purchase is captured and later polled by the loyalty card administration server. In some cases, the loyalty card terminal may write data relating to the customer's accumulated loyalty information to the card.

The polled information is collated, processed and distributed. The acquiring financial institution (i.e. bank) receives and collates all of the details of the retailer's daily transactions with the retailer's loyalty house administration organisation receiving the data from the loyalty terminals.

The financial institution processes the received financial transaction files and transfer payment into the retailer's account. Similarly and possibly in tandem, the loyalty house administration body processes the loyalty card data and, depending on their internal protocols, send points statements to the customers. Of course, electronic and paper copies of the financial transactions and loyalty details may be collated and sent to the retailer.

The current technology available in such situations results in a number of problems and limitations. At the point of sale, a retailer is unable to verify whether or not a card used for a payment is not fraudulent. Fraud notification generally only occurs after a transaction has been polled. It is well known that credit card fraud is an increasing problem due to cross-border issues in Europe and expanding use of credit cards on the Internet.

Another issue is that polling companies are not able to poll transactions on a cross-border basis. For retailers with multiple international outlets, the polling and processing of data must be done on a country-by-country basis.

Finally, the polled data is processed passively. This results in the retailers and the suppliers being unable to access real-time stock levels thus overstocking and returns can occur. The effect of this on running a business is self-evident.

Another issue is that a retailer can not effectively interact with the customer at the checkout at the time of purchase. Such interaction may be recognising that a particular customer is preferential which may trigger *ad hoc* discounts or other offers in real-time.

Thus it would be a distinct advantage if such problems could be overcome while allowing a retailer to effectively manage and operate an international or cross-border business as well as allowing a retailer and to some extent a loyalty card organisation, to more effectively interact in real-time with consumers at the time of purchase.

It is therefore an object of the present invention to provide an improved EPOS system and method of operating same which addresses or at least ameliorates some of the above-mentioned disadvantages and provides an effective and relatively inexpensive system which can be relatively easily integrated with legacy EPOS systems.

### Disclosure of the Invention

In one aspect, the present invention provides for a method of enhancing communication in a financial transaction system, the method including the steps of:
carrying out a financial transaction at a first remote location using a first financial transaction means;
translating data and related information derived from the financial transaction into a form which is both suitable for transmission and is intelligible to one or more second financial transaction means; wherein the translation of the data and related information is predicated on a knowledge of the characteristics and mode of operation of the first transaction means.

The translation of the data and related information may occur in a substantially transparent manner from the point of view of the first financial transaction means.

The first transaction device may produce and/or record data which cannot be read directly by, and/or communicated to the one or more second transaction means.

The second transaction means is preferably a device associated with any one or more of the following: financial institution, administrative institution, IT service provider, database, inventory and management system and the like, the aforementioned parties being optionally able to exchange data between themselves.

The second transaction means may be a server located at a corresponding financial institution, service provider or the like.

The interface means may be updatable remotely by means of commands sent from the second transaction means.

In a further aspect, the invention provides for an interface means adapted to be configurable in such a way as to allow communication of data between a first financial transaction means and one or more second financial transaction means where the first transaction means is either fully or partially unable to communicate with or produce data which is intelligible to the second transaction means.

The first and second financial transaction means may be remote from each other and communicate by means of a network.

The one or more second transaction means may be a server located at the financial institution, service provider or the like.

The interface means may be incorporated into the second transaction means.

The interface means may be remotely configurable in response to a determination of the nature and characteristics of the first transaction means.

The interface means may correspond to a computer configured to receive financial transaction data from the first transaction means, convert the data into a form which can be communicated to and understood by the second transaction means.

The first transaction means may correspond to a 'legacy' device which is inherently unable to communicate with an external financial transaction network or provide data which is intelligible to the one or more second transaction device.

The second transaction device may be in the form of one or more servers carrying out the functions of financial institution, administrative institution, IT service provider, database, inventory and management system.

The network may correspond wholly or partially to the Internet.

The one or more second transaction device preferably communicates with the first transaction device via a dialup, permanent connection or otherwise substantially real-time basis.

The first transaction device preferably includes a PINpad, swipe card unit, processor, report generation means, and manual entry keypad.

The interface is preferably adapted to differentiate data from a range of financial transactions capable of being carried out on the first transaction device, the transactions including debit, credit, loyalty and funds transaction processes.

The interface is preferably configured to operate with a particular first transaction device by means of configuration files which are maintained and stored on the remote second transaction device/network.

The interface device may, in an alternative embodiment, receive data from one or more first transaction devices.

The second transaction device may include functionality to allow bi-directional communication between a merchant and a customer using the first transaction device in real-time by such methods as email, fax, WAP and the like.

### Brief Description of the Drawings

The present invention will now be described by way of example only and with reference to the figures in which:
- Figure 1:: illustrates a prior art stand-alone EPOS/loyalty terminal system;
- Figure 2:: illustrates a prior art multi-lane retail site with in-store EPOS hardware and loyalty terminals;
- Figure 3:: illustrates an Internet payment gateway;
- Figure 4:: illustrates a schematic of the invention integrated into a present retail environment; and
- Figure 5:: illustrates diagrammatically the structure of the present invention in the context of an existing EPOS system.

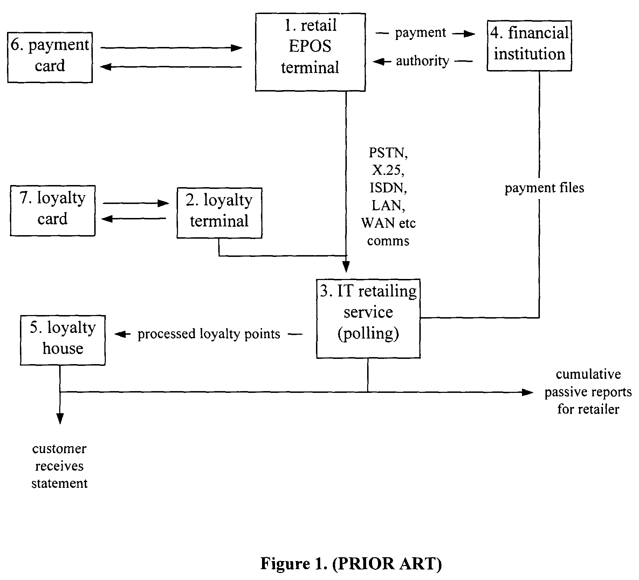

Figure 1 illustrates a prior art retail (EPOS) system. Such systems usually include a retail EPOS terminal 1 and a loyalty terminal 2. The retail EPOS terminal is connected via a data network to the retailer's acquiring bank 4 (or financial institution). The loyalty terminal 2 is connected via a PSTN, X.25, ISDN, LAN, WAN or other communication network to an IT retail server which carries out the function of polling the terminals. Payment card 6 and loyalty card 7 are used to transmit the customer's information to the retail EPOS terminal and loyalty terminal respectively.

The IT (polling) retail server 3 regularly polls the terminals 1 and 2 to download the accumulated customer data. This data includes financial transaction data as well as loyalty card data. The retail server processes the different types of data and forwards the loyalty data to the loyalty house 5 and payment file to the retailer's acquiring bank 4.

In cases where authorisation is required (i.e. the purchase is above the floor limit), an authorisation request can be sent between the retail EPOS terminal 1 and the retailer's acquiring bank 4. Similarly, for debit cards, and depending on the type of EPOS terminal hardware, direct payments may be made on on-going real-time basis to the retailer's acquiring bank 4. The loyalty house 5 collates and prepares points statements which can be combined with the output from the IT retail servers 3 to forward cumulative passive reports which may be used by the retailer for market and customer analysis.

The type of business which might use a system as shown in Figure 1 are typically small retail sites such as petrol stations, hypermarkets or single retail sites.

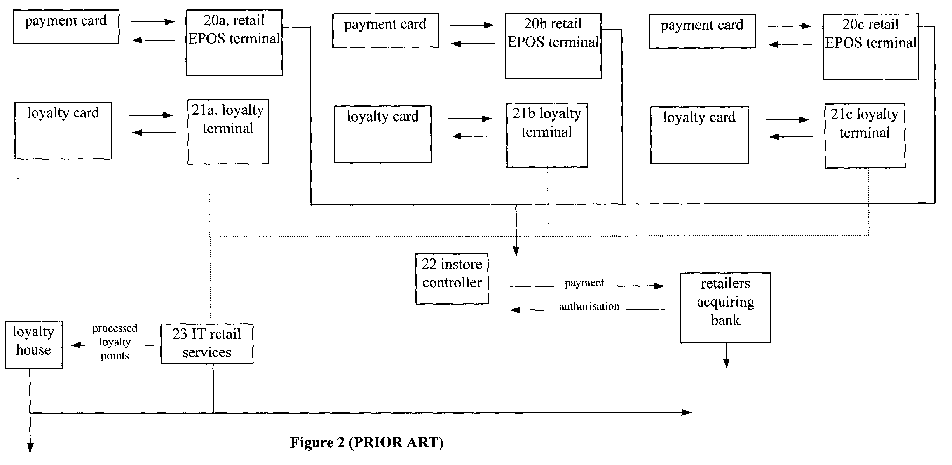

Figure 2 illustrates a prior art multi-lane retail site. This includes (in the particular example shown) three lanes each having a retail EPOS terminal 20a-c and loyalty terminal 21a-c. The EPOS terminals 20 are connected, via a LAN, to an in-store controller 22 which can carry out on-line authorisation and direct payment, where enabled. The loyalty terminals are connected to the IT retail service 23 which polls them in order to accumulate the loyalty card data which is then processed and forwarded to the loyalty house. In other respects, the system behaves as that illustrated in Figure 1.

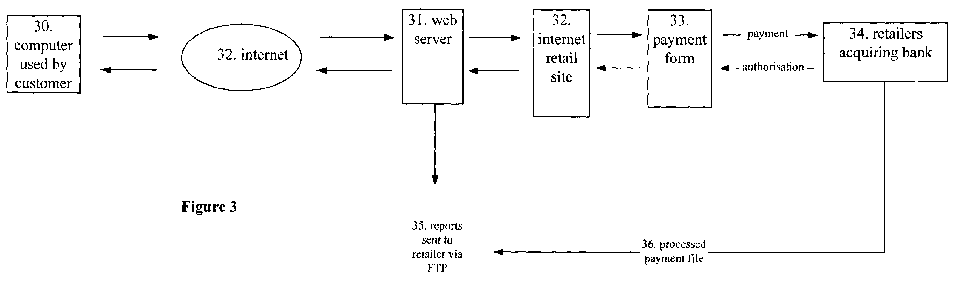

Figure 3 illustrates the general structure of an Internet payment gateway. Using such a system, an online merchant displays pages of information and items that are hosted on a web server. The products selected along with the physical merchants, will have a corresponding product code. Those selected by a customer from the merchants site produce a sales transaction. If the customer agrees to proceed with the purchase, they are linked to the sites secure area. A secure transaction area can reside on the webserver generating the merchants information and products or it can be a dedicated server linked to the acquiring bank. The customer is then required to enter their payment card details into the appropriate text field. These details along with the customers name and address are then sent to the Internet merchants acquiring bank for authorisation. In effect this process exhibits the same functionality that is implemented by an EPOS unit at a physical merchant outlet except that all of the details are manually entered. As with physical EPOS, the framework can reside on the server performing the transaction and perform the same functionality and enable the merchant to view all of the data via a secure web browser in real time rather than the current standard of FTO to the merchant.

The present invention eliminates the need for a separate loyalty card terminal while enabling EPOS hardware to exploit Internet technology. Further, the invention allows disparate EPOS and retail networks to intercommunicate transparently across national boundaries and in real-time.

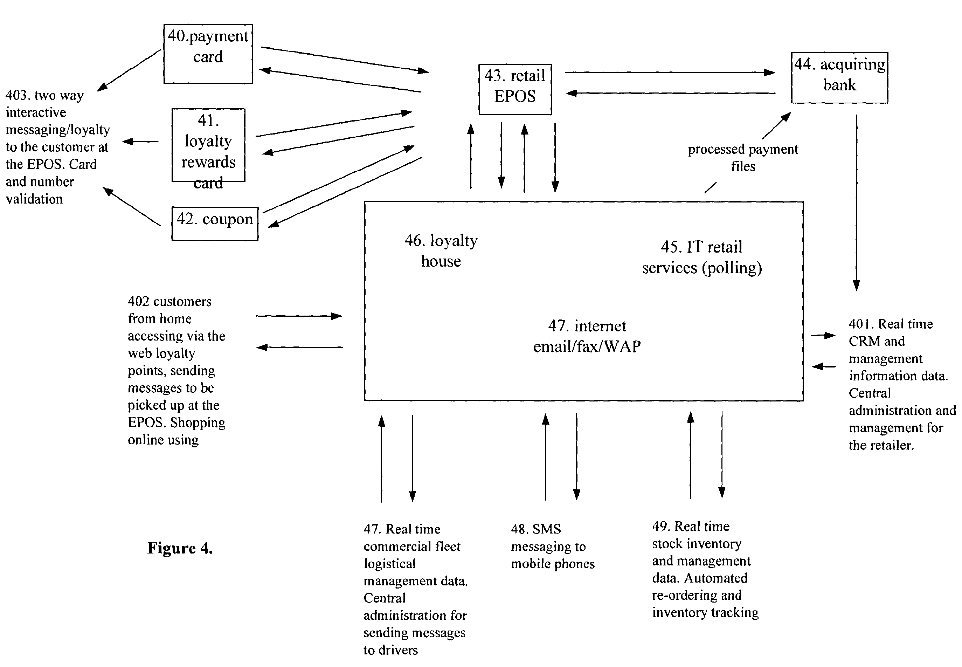

Figure 4 illustrates an overview of an implementation of the invention in the retail environment. Following the E-commerce or Internet financial transaction chain from the purchaser to the merchant, Figure 4 shows a customer 403 using either a payment card 40, loyalty reward card 41 or coupon 42 to purchase goods. The present invention is not to be construed as limited to this functionality as other types of cards and associated protocols may be viable. The cards 40, 41 and 42 are used with a legacy end-user EPOS hardware unit 43 modified or expanded according to the present invention. This will be explained in detail below.

Data collected from the payment, loyalty or coupon card is processed and the data forwarded to the acquiring bank 44, loyalty house 46 and IT retail services 45. It is possible that this interaction may happen on-line (i.e. in real-time) depending on the specific hardware. The EPOS hardware 43 may be legacy hardware which would not normally be capable of interacting in such a way with the merchant/ administration authorities 45 or the acquiring bank 44. The merchant/ administration authorities process the data and carry out standard inventory and business functions such as stock inventory 49, SMS messaging to mobile phones of customers 48 and logistical management 47. It is also possible that customers may directly access the merchant/administration authorities via a Web interface 402 thereby bypassing the legacy EPOS hardware 43 completely. Such interactivity is known and supplements the present invention.

The invention operates as follows. Most of the situations where the invention provides the most significant utility are those where established EPOS hardware systems are what are known as legacy systems which are not generally capable of communicating with the Internet or a financial network in real-time. The reasons for this are that the dedicated EPOS hardware may be specifically constructed to conform with statutory requirements, be out of date or merely conform to present established and accepted EPOS hardware protocols.

Essentially, the implementation of the invention is to provide an interface between legacy EPOS systems and financial and merchant/ administration systems in such a way that a user can transparently use a legacy EPOS system to input all of the necessary data into a single item of hardware. Further, the interface is implemented so that the financial institution and/or merchant/administration bodies may be located in a completely different geographical region. The simplest way to implement this functionality is if these institutions communicate with the legacy EPOS hardware via the Internet. In such cases once the transaction data is appropriately translated, there are essentially no limitations on where the data may be transmitted so long as appropriate translation software/hardware is used at the recipient (merchant/financial institution/administration authority). Further, where the invention results in the legacy EPOS hardware being capable of real-time or on-line transactions, the execution of the transaction may occur in real-time with positive and proactive feedback being sent to the merchant site at the time of purchase. Clearly this provides significant advantages where it is desired to intercept particular customers in order to provide real-time discounts, offers or information.

The invention may be implemented as an encompassing "framework" which, in a preferred embodiment, is a multiplatform, multitier framework written preferably in the Java programming language. Processing and communication within the framework can be performed at any tier (node) within the framework as appropriate. This framework facilitates two-way communication using TCP/IP protocols.

In the simplest embodiment, the framework consists of a network of what are known as agents (small Java applications) and/or mini-servers communicating with a main server in a centrally managed manner, collectively known as nodes to extract and act on data from existing legacy systems. The framework can be used to build complex distributed applications such as loyalty programs, messaging, just-in-time ordering and stock control without alteration to existing hardware and software.

An agent can be viewed as a functional software entity standing between a legacy system and the central server and the translation functionality is provided by the server/mini-server node, which allows it to accept data from a legacy system and convert it into a format which is readable and understandable by the central server. Once this has been done, financial, merchant-based and other functions can be performed.

In a typical arrangement, the framework corresponds to a series of agents interacting with a central server. When any particular agent is invoked, manually or according to a schedule, it follows a process whereby data is extracted or received from the transaction context (i.e. the sequence of events derived from a customer transaction). The data is parsed (locally or at the central server) in such a way that the data is consolidated (again locally or at the central server). Depending on the context and nature of the transaction, an appropriate response is generated either locally or at the central server. Interaction with the legacy system is non-intrusive and the existing processing of the legacy system is retained and not affected.

The agent is capable of processing data locally, via a simple decision table, or by transmission of further data to a framework node, usually the central server. Either option can produce a response which is sent back to the agent.

It is envisaged that the Java agent can reside with the host system without interference or modification to any legacy code, data or structure and it interacts with its host legacy system by reading the data via process and/or data interception (e.g. redirection of an EPOS card table for card number range), text file output by the legacy host system output of an end of day transaction record, or data sources utilising JDBC technology, for example, directly reading an SQL database of a back-office machine.

Agents must therefore "know" the characteristics of the legacy hardware in terms of potential output formats. Of course the agent must be physically capable of accessing the EPOS hardware. This may be by way of a suitable data port (such as serial, parallel etc). . In essence, this corresponds to the agent being able to interpret the particular data which is collected by the legacy system whereupon it must be able to (as necessary) modify that data and translate it into a form which can be understood by the central server. Accordingly, the framework may be viewed as including a series of agents, all of which are particularly tailored to a specific piece of legacy hardware with which the agent is associated.

The behaviour of any particular agent can be altered either centrally or directly using what is know as an agent configuration file.

The behaviour of the agent is governed using forms which are accessed from a local machine, or via forms available via a Web browser. Forms will be discussed in greater detail below.

It is envisaged that communication between nodes will be carried out via TCP/IP protocols. Of course other communication paradigms may be viable. The use of an established protocol such as TCP/IP and an application server dispenses with the need for call handling equipment. Of course, data transferred between the nodes can be encrypted to ensure security. The encrypted data can be optionally compressed or split into packets.

The server is configured and its operating software written so as to enable it to gather and consolidate information from different data sources, using different methods and generating and distributing data based on the input.

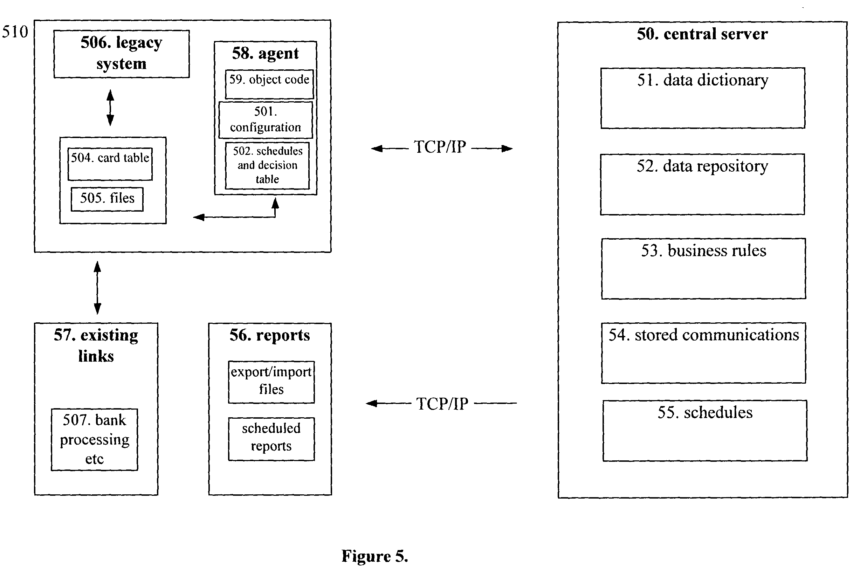

Figure 5 illustrates an overview of a framework incorporating the invention. The remote (or merchant-based functionality) is represented by the box 510. This incorporates the legacy system 506 and the agent 58. The legacy system may be a physically stand alone piece of hardware such as a card reader, PINpad or similar. The agent may reside on a computer connected to the legacy hardware via an appropriate interface. The interconnection of such devices is considered within the scope of one skilled in the art and will not be discussed further. The agent consists of software 59, one or more configuration files 501 and schedules/decision tables 502. The legacy system 506 produces data in the form of files 505 and/or a card table 504. This data is sent to an output which is intercepted by the agent. The agent communicates with the central server 50 by means of a TCP/IP interface. The central server consists of a data dictionary 51, a data repository 52, business rules 53, stored communications 54 and schedules 55. These will be discussed in more detail below. The central server is able to generate and communicate reports 56 via a TCP/IP connection.

The agent and legacy system can communicate with a financial transaction authority such as a bank 57 whereupon bank processing 507 of data interpreted by the agent can occur.

A simplified process of translation and communication is as follows. A schedule event occurs at the agent. A schedule event may be a financial transaction, loyalty transaction or similar. The local decision table is queried to determine whether action is to be performed locally or at the server. If the agent is to respond locally, a response is produced and the agent acts on the response and, if necessary, the processing is parsed to the legacy system. If the response is to be generated at the server, data is communicated via the TCP/IP link to the server. The structure of the communication is validated and the data parsed and extracted. The server then generates a response which is transmitted via the TCP/IP link to the agent whereby processing is parsed to the legacy system if required.

In the context of the server, process flow may be in the form of a scheduled event occurring (such as a polling or report generation triggering event), server-side processing occurs and the results are distributed.

The server holds a data dictionary 51 and a data repository 52. The data dictionary 51 defines the structure and relationships that the data flow must follow and the data repository 52 holds data relating to the implemented legacy system.

By way of example, the data dictionary may hold information relating to the recognition and structure of an input file and use this information to parse an instance of a file type to extract its held data into the data repository.

The dictionary 51 defines the structure of inputs, outputs and events/ responses. Customer extensions may be built into an implementation of the framework to provide application-specific functionality and to optimise the parsing process. The data repository 52 also holds application data, is generic and extensible.

Having the data dictionary 51 and repository 52 located on the server (and therefore accessible via TCP/IP, and generally via the Internet) has the advantage of allowing inputs of many formats and legacy system types. New formats are defined in the data dictionary 51 rather than the agent 58 so that re-coding or custom building of application specific routines for the agent 58 is not required. Thus modification of such code can be typically performed by a system administrator at a central location.

The agents can be viewed as software entities, for example, Java code. Agents can be distributed by electronic means such as CD ROM, floppy disk or Internet download. An agent, once installed and configured, can act in a manual or scheduled mode. In manual mode, a user selects data to be collected by the agent. In scheduled mode, the agents behaviour or operation is defined by a configuration file. As agents are software entities, they can be updated, modified and upgraded relatively easily either by on-disk distribution or Internet download.

As noted above, the behaviour of an agent can be controlled by means of a configuration file. The configuration of an agent consists of functionality which identifies and controls the specific agent. This functionality can be viewed as software including "sections". These sections may include a header section, operation mode section, time out, service, node identifier, communication configuration, connection detail and allowable reports section. The sections each contain lines which determine the behaviour of the node or part of the framework incorporating the legacy hardware.

Each node (or agent and legacy system combination) has stored therein a set of schedules which defines the behaviour of the node and can be altered from the central server. A schedule consists of an event, action and object. The trigger for an event can be a request, a specific event or a time period. The action is the action which is to be taken when an event occurs and the object is the object on which the action is to be performed. Periods at which schedules are invoked are either event based, time based or *ad hoc.* In terms of an event bases period, this may be correspond to a defined system event or chain of events which occurs which an agent is able to detect. For example, this may be a card swipe or a new transaction added to the transaction file. In terms of a time based schedule, this may correspond to a schedule being set to trigger on a cyclic basis, for example, daily or weekly. *Ad hoc* scheduling may correspond to a situation where a specific request is made for a one-off action. For example, the server might update the configuration file for a set of agents, or a system export is requested.

Schedule actions can fall into one of four categories. These include send/request, move, read and execute. A send/request action might be the sending of a transaction file update or the transmission of loyalty card data on a card-swipe event. A move action might correspond to moving a new agent configuration file in order to replace an old agent configuration file. A read action occurs when a database is directly accessed. The execute action may be used to invoke a script or executable and maybe optionally parameterised. For example, a script which generates the end of day report on a host legacy machine may be triggered by such an action.

Schedule objects can be defined explicitly or by means of a token. The former may correspond to a file name and the latter a set of values that allows the system to recognise the required object such as part of file name and the expected directory.

As it can be seen schedules essentially constitute a form of macro language which can be used to define complex tasks for an agent to perform.

An important part of the present invention is interfacing of agent with the legacy system.

The agent interacts with the host or legacy system by generating or intercepting existing external events. Examples of interface types include the following:
card table - when a card swipe occurs, the card table EPOS resident is configured to send the transaction data to a node which processes the data. Following a card table interface type, the processing is redirected to its original path;
file - legacy system data is held in one or more files which are collected and processing by the framework; and
database - legacy system data is held in a database which is read and processed by the framework.

The schedule file is used by the agent to recognise the interface type and how to process the extracted data. Of course, the framework does not alter the legacy data which is available to the legacy system.

It is envisaged that the actions of an agent will be read-only and only duplicate files are altered or moved. If a process is redirected, for example, when the card table is re-routed to the agent, the flow is restored at the end of the agent operation. For example, a card swipe would be redirected by the card table to the agent for processing. If the card swipe previously initiated a different process, the agent would redirect the processing after completing its own processes. Thus the data is still translated and parsed to the central server. However, if an event such as generating a report, receipt or the like is meant to occur upon a card swipe, this action would be completed as normal.

The data dictionary resident on the server defines the meta-level definition for the implementation of the framework. It carries data driven definitions of framework objects so the scope and functionality of the framework can be modified and extended without additional code. The data dictionary would hold definitions for all system objects including input formats, output formats, two-way communications and tag definitions. Tag definitions will be discussed below. To illustrate the use of the data dictionary, a framework administrator may wish to define a new input report format for a piece of EPOS hardware joining the network. To include the new format, a report definition would be added to define the type and format of the data contained within the new report.

Each application has a set of tags which represent concepts of interest. Tags are employed to ensure that the data from different sources is able to be consolidated into a standardised structure. The names of the tags must be unique within an application and a tag may take one of several defined types.

These include input/output to define a value that forms part of input/ output communication; parsing, to define how the input/output tag is incorporated into the data repository; substitution, to define how one value is substitute for a token; reporting, to define how a report value is displayed; parameters, to define allowable parameter values, application specification and user defined. Input/output tags that form the base concepts for an application may require further recorded detail and are referred to as primary tags. An example of such a primary tag would be in stock control applications where products and suppliers would correspond to primary tags as additional information would need to be associated with them.

Tags are used to produce a data driven and extensible framework for carrying, parsing and processing communications of different types.

The data repository is resident on the server and contains application data in a standardised structure. The data dictionary is used to define the structure of the system objects and the repositories used to hold values against the structure. This approach has the advantage of flexibility and extensibility and can also be used to form a standardised view of framework data drawn from different sources at different frequencies.

In addition to the application data, the repository also holds data relating to the configuration and operation of the system (i.e. administration data) such as received files, errors reported and errors generated etc. It also holds a list of all operations and communications made by nodes within the framework so that the system performance and function can be audited if necessary.

The operation of the server may be scheduled in terms of tasks such as requesting data from nodes, report generation and administration/housekeeping. Scheduling may be configured by an administrator and assigned to the server process. Such an approach to automated tasks such as these is well known in the art and will not be discussed in detail.

Each primary tag used by an application has a custom set of attributes which are used to define and store information relating to the tag. These are stored in a master list. A master list is a set of unique instances of an application concept. These are usually custom built extensions to the applications supported by the framework. For example, a "retailer" primary tag will have information relating to the unique system identifier, name, location, contact details etc. A "product" could have a master list, and a system objective would be to record every instance of a product without duplication or admission so that incoming data for product can be mapped onto a unique instance.

As noted above, within legacy systems, data is recorded in different ways and with different codes. Therefore, a translation is made on received data in order to maintain the consolidated master lists. The value defined by a legacy system is referred to as a synonym of an instance in a master list and it is possible to map a unique translation from this value to the master list. This idea essentially corresponds to providing a translation table between data elements to unique values which can be understood by the server software.

In operation, on receipt of a file or message from the legacy hardware, the node determines the type of communication being received and the sending node. The central server holds master lists for each of the tags within the system and additionally a table of synonyms that allow translation from an identifying object used by an individual or set of legacy systems to the master list. The parsing process validates, extracts the data and generates a response. The input data is validated against the expected structure by using the data dictionary and a check is made that synonyms exist for each of the tags being parsed. Assuming that the data is validated, the data is extracted into the data repository. If the structure of the data is not valid, an exception is raised. If unresolved synonyms exist, the synonyms are added to the synonym list and an exception is raised.

If this is validated, the server then checks for a generated response and if one exists, sends it back to the communicating node.

It is envisaged that when an agent communicates with the central server, it may accumulate or append to a log file. Information is also logged relating to the transfer to check its validity and may include information including a links check and checks them.

Of course, the framework may include systems for error reporting such as whereby invalid input structures might generate e-mail warnings and unresolved synonyms generate errors that require viewing via the Internet. The framework is also self-auditing and self-maintaining. Examples of this are that the framework can detect and report that a task(s) has not been performed as expected and that if an object code for an agent is to be updated, the framework can be used to update the agent code rather than on site (i.e. the framework can maintain framework nodes as well as framework data).

The output of the server side part of this framework is one or more reports. A report is any output from the framework that displays formatted data from the dictionary or repository or formatted data that is used to interface with external systems. Reports can be distributed via the Internet (as Web pages) to a selected node or to an e-mail address. Reports may be generated in any number of types including predefined reports and user defined reports. The server may also "know" about external interfaces whereby files can be extracted according to a structure defined in the data dictionary for later importation into other tools and packages.

Finally, the framework implements archiving and housekeeping functionality which can be used to define the lifespan of certain received data, the lifespan of data objects and the definition of actions to be taken on the expiry of a lifespan. For example, a system administrator may require that data files be archived after 30 days.

The above description has described a specific implementation of the preferred embodiment of the system. However, the translation or interface functionality of the invention may be implemented in a number of other ways. Accordingly, the above description is not intended to be limiting and there may exist additional functionality which might depend on the merchant type, the network type and possibly the statutory, geographical and other constraints which may affect implementation of at least the network and data aspect of the invention.

Thus the present invention provides a means by which disparate types, numbers and locations of legacy EPOS, loyalty and other types of financial transaction hardware may be usefully utilised in such a way that data from these devices can be transparently collated, manipulated and specific reports and other functionality generated depending on the particular requirements of the framework.

Although the present invention has been described by way of example only and with reference to the possible embodiments thereof, it is to be appreciated that improvements and/or modifications may be made thereto without departing from the scope of the invention as set out in the appended claims.

Where in the foregoing description reference has been made to integers or components having known equivalents, then such equivalents are herein incorporated as if individually set forth.

## Claims

1. A method of enhancing communication in a financial transaction system, the method including the steps of:
carrying out a financial transaction at a first remote location using a first financial transaction means;
translating data and related information derived from the financial transaction into a form which is both suitable for transmission and is intelligible to one or more second financial transaction means; wherein the translation of the data and related information is predicated on a knowledge of the characteristics and mode of operation of the first transaction means.

2. A method as claimed in claim 1 wherein the translation of the data and related information occurs in a substantially transparent manner from the point of view of the first financial transaction means.

3. A method as claimed in claim 1 wherein the first transaction device produces and/or records data which cannot be read directly by, and/or communicated to the one or more second transaction means.

4. A method as claimed in claim 1 wherein the second transaction means is a device associated with any one or more of the following: financial institution, administrative institution, IT service provider, database, inventory and management system and the like, the aforementioned parties being optionally able to exchange data between themselves.

5. A method as claimed in claim 4 wherein the second transaction means is a server located at a corresponding financial institution, service provider or the like.

6. A method as claimed in claim 1 comprising the step of updating the process of translating remotely by means of commands sent from the second transaction means.

7. An interface means adapted to be configurable in such a way as to allow communication of data between a first financial transaction means and one or more second financial transaction means where the first transaction means is either fully or partially unable to communicate with or produce data which is intelligible to the second transaction means.

8. An interface means as claimed in claim 7 wherein the first and second financial transaction means are remote from each other and communicate by means of a network.

9. An interface means as claimed in claim 7 wherein the one or more second transaction means is a server located at the financial institution, service provider or the like.

10. An interface means as claimed in claim 7 wherein the interface means is incorporated into the second transaction means.

11. An interface means as claimed in claim 7 wherein the interface means is remotely configurable in response to a determination of the nature and characteristics of the first transaction means.

12. An interface means as claimed in claim 7 wherein the interface means corresponds to a computer configured to receive financial transaction data from the first transaction means, convert the data into a form which can be communicated to and understood by the second transaction means.

13. An interface means as claimed in claim 7 wherein the first transaction means corresponds to a 'legacy' device which is inherently unable to communicate with an external financial transaction network or provide data which is intelligible to the one or more second transaction device.

14. An interface means as claimed in claim 7 wherein the second transaction device is in the form of one or more servers carrying out the functions of financial institution, administrative institution, IT service provider, database, inventory and management system.

15. An interface means as claimed in claim 7 wherein the network corresponds wholly or partially to the Internet.

16. An interface means as claimed in claim 7 wherein the one or more second transaction device communicates with the first transaction device via a dialup, permanent connection or otherwise substantially real-time basis.

17. An interface means as claimed in claim 7 wherein the first transaction device includes a PINpad, swipe card unit, processor, report generation means, and manual entry keypad.

18. An interface means as claimed in claim 7 wherein the interface is adapted to differentiate data from a range of financial transactions capable of being carried out on the first transaction device, the transactions including debit, credit, loyalty, transmission of alphanumeric sequences, mobile phone communication, barcode reading/transmission, and funds transaction processes.

19. An interface means as claimed in claim 7 wherein the interface is configured to operate with a particular first transaction device by means of configuration files which are maintained and stored on the remote second transaction device/network.

20. An interface means as claimed in claim 7 wherein the interface device receives data from one or more first transaction devices.

21. An interface means as claimed in claim 7 wherein the second transaction device includes functionality to allow bi-directional communication between a merchant and a customer using the first transaction device in real-time by such methods as email, fax, WAP and the like.

22. A computer program adapted to translate data and related information derived from a financial transaction, carried out by a first transaction means, into a form which is both suitable for transmission and is intelligible to one or more second financial transaction means, wherein the translation of the data and related information is predicated on a knowledge of the characteristics and mode of operation of the first transaction means.
